(19) **Europäisches Patentamt**
**European Patent Office**
**Office européen des brevets**

(11) **EP 2 044 260 B1**

(12) **EUROPEAN PATENT SPECIFICATION**

(45) Date of publication and mention
of the grant of the patent:
**24.02.2010 Bulletin 2010/08**

(51) Int Cl.:
**D06N 7/00** *(2006.01)* **B60N 3/04** *(2006.01)*
**D01F 8/06** *(2006.01)* **D04H 3/14** *(2006.01)*
**D04H 11/00** *(2006.01)*

(21) Application number: **07785959.3**

(22) Date of filing: **10.07.2007**

(86) International application number:
**PCT/EP2007/006092**

(87) International publication number:
**WO 2008/009370 (24.01.2008 Gazette 2008/04)**

(54) **TUFTED NONWOVEN AND BONDED NONWOVEN**

GETUFTETER VLIESSTOFF UND GEBUNDENER VLIESSTOFF

NON-TISSE TOUFFETE ET NON-TISSE CONTRECOLLE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **15.07.2006 EP 06014783**

(43) Date of publication of application:
**08.04.2009 Bulletin 2009/15**

(73) Proprietor: **Colbond B.V.**
**6827 AV Arnhem (NL)**

(72) Inventors:
• **DIJKEMA, Jan**
**NL-7201 GB Zutphen (NL)**
• **VISSCHER, Edze, Jan**
**NL-3544 MC Utrecht (NL)**

(74) Representative: **Oberlein, Gerriet H. R.**
**CPW GmbH**
**Kasinostrasse 19-21**
**42103 Wuppertal (DE)**

(56) References cited:
**WO-A-03/069039**

• **PATENT ABSTRACTS OF JAPAN vol. 2000, no.
02, 29 February 2000 (2000-02-29) & JP 11 309063
A (UNITIKA LTD), 9 November 1999 (1999-11-09)**
• **DATABASE WPI Section Ch, Week 200004
Derwent Publications Ltd., London, GB; Class
A84, AN 2000-046993 XP002338078 & JP 11
309063 A (UNITIKA LTD) 9 November 1999
(1999-11-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention pertains to a tufted nonwoven, a bonded nonwoven, methods for their manufacture and uses thereof.

WO 00/12800 discloses a nonwoven primary carpet backing comprising thermoplastic polymer filaments or fibers bonded by means of a binder polymer, wherein the backing comprises at least a distinguishable thermoplastic woven layer, a distinguishable thermoplastic continuous layer, or a distinguishable nonwoven layer also comprising filaments or fibers bonded by means of a binder polymer. If said primary carpet backing is tufted an increased stitch lock (stitch holding) is observed however in combination with a reduced delamination strength of the backing.

US 2002/0144490 discloses a fiber spinning process for manufacturing a web of fibers comprising a homogeneous mixture of fibers of different characteristics. Bicomponent fibers having a common core polymer and different sheath polymers can be extruded from alternate spinneret orifices in the same die plate. Products formed from the improved mixed fiber technology are useful as high efficiency filters in various environments, coalescent filters, reservoirs for marking and writing instruments, wicks and other elements designed to hold and transfer liquids for medical and other applications, heat and moisture exchangers and other diverse fibrous matrices.

Therefore, one object of the present invention is to provide a method to manufacture a nonwoven which after tufting yields a tufted nonwoven exhibiting an increased stitch holding without reduced delamination strength.

Said object is achieved by a method to manufacture a tufted nonwoven with improved stitch holding comprising the following steps:

a) Mixing a plurality of bicomponent filaments 1 which comprise a component 11 and a component 12 with a plurality of bicomponent filaments 2 which comprise a component 21 and a component 22 wherein

iα) at least bicomponent filaments 1 exhibit a core/sheath geometry wherein component 11 represents the core and component 12 represents the sheath or
iβ) at least bicomponent filaments 1 exhibit a side by side geometry wherein component 11 represents side 1 and component 12 represents side 2 or
iγ) at least bicomponent filaments 1 exhibit an islands in the sea geometry wherein component 11 represents the islands and component 12 represents the sea
ii) the component 11 exhibits a melting temperature $T_m(11)$, the component 22 exhibits a melting temperature $T_m(22)$ and $T_m(11)$ is equal to $T_m(22)$ or $T_m(11)$ is not equal to $T_m(22)$,
iii) the component 12 exhibits a melting temperature $T_m(12)$, the component 21 exhibits a melting temperature $T_m(21)$ and $T_m(12)$ is higher than $T_m(21)$ and
iv) the melting temperatures of both component 11 and 22 and the melting temperatures of components 12 and 21 obey to the relation both $T_m(11)$ and $T_m(22) > T_m(12) > T_m(21)$

and producing a basic fibrous layer in a method known per se in which bicomponent filaments 1 contact bicomponent filaments 2 at zones of overlap,
b) heating the basic fibrous layer at a temperature for nonwoven production $T_{np}$ which obeys to the relation $T_m(12) > T_{np} > T_m(21)$ till component 21 melts at the zones of overlap and then cooling below $T_m(21)$ resulting in a bonded nonwoven,
c) tufting the bonded nonwoven with a face material resulting in a tufted nonwoven, exhibiting contacts between the face material and bicomponent filaments 1 and 2 and optionally
d) heating the tufted nonwoven, optionally under pressure, at a temperature $T_{tn}$ which obeys to the relation $T_m(12) < T_{tn} < T_m(11)$ and $T_m(22)$ till component 12 and component 21 melt resulting in a tufted nonwoven in which molten component 21 and molten component 12 contact the face material and then cooling the nonwoven below $T_m(21)$,

to obtain the tufted nonwoven with improved stitch holding.

According to step a)iα) at least the bicomponent filaments 1 exhibit a core/sheath geometry wherein component 11 represents the core and component 12 represents the sheath. Within the scope of the present invention this means that either bicomponent filaments 1 and bicomponent filaments 2 exhibit core/sheath geometry or bicomponent filaments 1 exhibit core/sheath geometry and bicomponent filaments 2 exhibit another bicomponent geometry, e.g. a side by side geometry or an island in the sea geometry. Consequently, if bicomponent filaments 1 and bicomponent filaments 2 exhibit a core/sheath geometry component 11 represents the core of bicomponent filaments 1, component 12 represents the sheath of bicomponent filaments 1, component 22 represents the core of bicomponent filaments 2 and component 21 represents the sheath of bicomponent filament 2. However, if bicomponent filaments 1 exhibit core/sheath geometry and bicomponent filaments 2 exhibit another bicomponent geometry e.g. a side by side geometry component 11 represents the core of bicomponent filaments 1, component 12 represents the sheath of bicomponent filaments 1, component 22 means side 1 of bicomponent filaments 2 and component 21 means side 2 of bicomponent filaments 2.

According to step a)iβ) at least the bicomponent filaments 1 exhibit a side by side geometry wherein component 11 represents side 1 and component 12 represents side 2. Within the scope of the present invention this means that either bicomponent filaments 1 and bicomponent filaments 2 exhibit side by side geometry or bicomponent filaments 1 exhibit side by side geometry and bicomponent filaments 2 exhibit another bicomponent geometry, e.g. a core/sheath geometry or an island in the sea geometry. Consequently, if bicomponent filaments 1 and bicomponent filaments 2 exhibit a side by side geometry component 11 represents the side 1 of bicomponent filaments 1, component 12 represents side 2 of bicomponent filaments 1, component 22 represents the side 1 of bicomponent filaments 2 and component 21 represents side 2 of bicomponent filaments 2. However, if bicomponent filaments 1 exhibit side by side geometry and bicomponent filaments 2 exhibit another bicomponent geometry e.g. a core/sheath geometry component 11 represents side 1 of bicomponent filaments 1, component 12 represents side 2 of bicomponent filaments 1, component 22 means the core of bicomponent filaments 2 and component 21 means the sheath of bicomponent filaments 2.

According to step a)iγ) at least the bicomponent filaments 1 exhibit an islands in the sea geometry wherein component 11 represents the islands and component 12 represents the sea. Within the scope of the present invention this means that either bicomponent filaments 1 and bicomponent filaments 2 exhibit an island in the sea geometry or bicomponent filaments 1 exhibit an island in the sea geometry and bicomponent filaments 2 exhibit another bicomponent geometry, e.g. a core/sheath geometry or a side by side geometry. Consequently, if bicomponent filaments 1 and bicomponent filaments 2 exhibit an islands in the sea geometry component 11 represents the islands of bicomponent filaments 1, component 12 represents the sea of bicomponent filaments 1, component 22 represents the islands of bicomponent filaments 2 and component 21 represents the sea of bicomponent filaments 2. However, if bicomponent filaments 1 exhibit an islands in the sea geometry and bicomponent filaments 2 exhibit another bicomponent geometry e.g. a core/sheath geometry component 11 represents the islands of bicomponent filaments 1, component 12 represents the sea of bicomponent filaments 1, component 22 means the core of bicomponent filaments 2 and component 21 means the sheath of bicomponent filaments 2.

The proportion of components 11:12 and of components 22:21 may be in the range of 5:95 to 95:5 vol.-% and preferably between 60:40 and 95:5 vol.-%. The ratio of bicomponent filaments 1 to bicomponent filaments 2 may be in the range of 5:95 to 95:5 wt.-% and is preferably 60:40 wt.-%.

For the sake of conciseness the advantageous properties of the tufted nonwoven obtained by the process of the present invention shall be explained in the following in an embodiment according to a)iα) wherein both bicomponent filaments 1 and 2 exhibit a core/sheath geometry. In this case the relation of temperatures

- in step iii) reads $T_m$(sheath 1) > $T_m$(sheath 2) and
- in step iv) reads both $T_m$(core 1) and $T_m$(core 2) > $T_m$(sheath 1) > $T_m$(sheath 2).

The tufted nonwoven obtained by the method of the present invention exhibits excellent stitch holding because in step d) at the contacts of the face material with the melt of sheath 1 and with the melt of sheath 2 of the bicomponent filaments 1 and 2 said melts start to flow along and/or around the face material thereby increasing the contact area between the face material and bicomponent filaments 1 and 2. By cooling below $T_m$(sheath 2), preferably below the glass transition temperature of sheath 2 $T_g$(sheath 2) in step d) said enlarged contact area solidifies and yields a strong adhesion between the face material and the sheaths of bicomponent filaments 1 and 2. Within the scope of the method according to the present invention heating at $T_{tn}$ till the sheaths of bicomponent filaments 1 and 2 melt means that at the contacts of the face material with melts of sheath 1 and sheath 2 such a quantity of the sheaths of bicomponent filaments 1 and 2 melt that after cooling below $T_m$(sheath 2), preferably below the glass transition temperature of sheath 2 $T_g$(sheath 2) the resulting adhesion between the face material and the sheath of bicomponent filaments 1 and 2 is sufficiently strong for the intended uses of the tufted nonwoven described later. If the time, during which $T_{tn}$ is applied to the tufted nonwoven, is sufficient to enable that the melts of sheath 1 and 2 can flow completely around the face material, after cooling below $T_m$(sheath 2), preferably below the glass transition temperature of sheath 2 $T_g$(sheath 2) loops of solidified sheath 1 and sheath 2 polymer tightly enclose the face material and thereby increase the stitch holding.

Furthermore, a tufted nonwoven results from the method according to the present invention without any problems with respect to delamination because the nonwoven obtained by said method is not a laminate.

Finally, the method of the present invention yields a tufted nonwoven with kept structural integrity because of the following reasons. In step b) the mixture of the bicomponent filaments 1 and 2 is heated at $T_m$(sheath 1) > $T_{np}$ > $T_m$(sheath 2) till sheath 2 of bicomponent filaments 2 melts at the zones of overlap. In these zones of overlap of filaments skin bonding will occur thus providing structural integrity of the nonwoven.

One skilled in the art who knows the process of the present invention and the above explanation of the advantageous properties of the tufted nonwoven which results from said process is able to adapt this explanation to bicomponent embodiments e.g. with island in the sea geometry or with side by side geometry or with another bicomponent geometry. All such embodiments belong to the scope of the process of the present invention.

Although within the scope of the present invention the term "filament" in its broadest sense, including mono- or multifilaments which might be spun bond or melt blown or made by another technique known per se, is used, for those skilled in the art it is clear and will not depart from the scope of this invention that also shorter fibers, such as e.g. staple fibers, can be used instead. The usage of the term "filament" is for sake of convenience only and should not be considered a restriction in terms of the length of the fibers. The materials which can be used to form the bicomponent filaments 1 and 2 can be selected from a great variety of material classes provided that the molting points of the chosen classes obey to the restrictions which are taught in the process of the present invention. For example filaments of synthetic or natural origin comprising organic polymers can be used belonging e.g. to the groups of thermoplastics, elastomers or thermoplastic elastomers. Said filaments might be biodegradable. Furthermore, filaments comprising inorganic materials, e.g. ceramics, glasses or metals can be used. In the method of the present invention polymers and especially thermoplastic polymers are the preferred materials to be used for the bicomponent filaments 1 and 2.

Within the scope of the present invention the term "face material" means any material suitable for tufting provided that said material virtually does not melt or decompose at $T_m$(sheath 1). That means that the melting temperature of the face material or in the case of a face material which does not exhibit a melting point the decomposition temperature is higher than $T_m$(sheath 1). The face material can be used in the shape of ribbons, yarns, cord, artificial turf or in any other shape suitable for tufting.

Again, for the sake of conciseness the preferred embodiments of the process according to the present invention shall be explained in the following in an embodiment according to a)iα) wherein both bicomponent filaments 1 and 2 exhibit a core/sheath geometry. In this case as explained before the relation of temperatures

- in step iii) reads $T_m$(sheath 1) > $T_m$(sheath 2) and
- in step iv) reads both $T_m$(core 1) and $T_m$(core 2) > $T_m$(sheath 1) > $T_m$(sheath 2).

So, the selection of a polymer which forms the core of bicomponent filaments 1 and 2 is limited by the core's melting point in relation to the melting points of sheath 1 and 2 as defined in step 1a)iv) and of course by the properties which are required for the core of a polymeric bicomponent filament to be usable for the manufacture of a tufted nonwoven. Those skilled in the art know said required properties, e.g. strength, elongation, modulus, tuftability, molding behavior, dimensional stability etc.

So, correspondingly selected polymers can be used as core for the bicomponent filaments of the present invention's method. For example the same type of polymer can be used for the core of bicomponent filaments 1 and 2 wherein the melting point of the cores in bicomponent filaments 1 and 2 are equal or not equal the latter embodiment being realized e.g. by two polymers of the same type but with different molecular weights. Or two different types of polymers can be used for the cores of bicomponent filaments 1 and 2 having the same or a different melting point. In each of said embodiments 100 weight % of the core e.g. of bicomponent filaments 1 can consist of one certain core polymer. But it is also possible that a polymer material is selected for the core of bicomponent filaments 1 and/or 2 comprising an amount of < 100 weight % of the core of the corresponding bicomponent filaments, the difference to 100 weight % comprising e.g. spinning auxiliaries, fillers, flame retardant materials, UV inhibitors, crystallizers, plastisizers, retarders/accelerators, heat stabilizers, antimicrobial additives or combinations thereof.

However, said < 100 weight % amount of core polymer amount must be high enough to ensure that the core properties which are required for the process of the present invention are realized.

In a preferred embodiment of the process according to the present invention bicomponent filaments 1 exhibit a core/sheath geometry wherein component 11 represents the core and component 12 represents the sheath, wherein bicomponent filaments 2 exhibit a core/sheath geometry wherein component 22 represents the core and component 21 represents the sheath and wherein the cores of bicomponent filaments 1 and of bicomponent filaments 2 comprise a thermoplastic polymer selected from the group consisting of polyethyleneterephthalate (PET), polypropylene (PP), polyamide (PA), polybutyleneterephthalate (PBT), polytrimethyleneterephthalate (PTT), polyphenylenesulfide, polyethylenenaphthalate (PEN), polyethyleneimide (PEI), polylactic acid (PLA) and polyoxymethylene (POM).

In the method of the present invention the selection of the sheath polymer for bicomponent filaments 1 is limited by the melting point of the sheath of bicomponent filaments 1 in relation to the melting point of the sheath of bicomponent filaments 2 and of the cores as defined in step a)iv) and of course by the meltability of the sheaths of bicomponent filaments 1 and 2 without substantial degradation, i.e. without a substantial decrease of the properties of the sheath of bicomponent filaments 1 and 2 which are required for polymeric bicomponent filaments to be suited for the manufacture of a tufted nonwoven. Those skilled in the art know said required properties, e.g. strength, elongation, modulus, dye ability, coating behavior, hydrophilic/lipophilic balance, lamination behavior, fusion behavior and bonding strength. And said required properties have to be sufficiently retained in the bonded skins obtained in step b) and after the cooling in step d).

So, correspondingly selected thermoplastic polymers can be used as the sheath for the bicomponent filaments 1 and 2 of the present invention's method. For example the same type of polymer can be used for the sheaths of bicomponent filaments 1 and 2 wherein the melting points of the sheaths are different, e.g. because of different molecular weights. Or different types of polymers can be used for the sheaths of bicomponent filaments 1 and 2 wherein the melting points of the sheaths are different. In each of said embodiments the sheath of bicomponent filaments 1 and/or 2 can consist to 100 weight % of a certain thermoplastic polymer. But it is also possible that a selected polymer material for the sheath of bicomponent filaments 1 and/or 2 comprises < 100 weight % of a thermoplastic polymer, the difference to 100 weight % comprising e.g. spinning auxiliaries, fillers, colorants, crystallizers, retarders/accelerators, stabilizers and plastisizers or combinations thereof. However, said < 100 weight % amount of sheath polymer amount must be high enough to ensure that the sheath properties which are required for the process of the present invention are realized.

Preferably, the sheath of bicomponent filaments 1 comprises a thermoplastic polymer selected from the group consisting of polyamide (PA), e.g. PA 6, polypropylene (PP), polyethylene (PE) or copolymers thereof, polybutyleneterephthalate (PBT), polylactic acid (PLA) and aliphatic polyesters.

Preferably, the sheath of bicomponent filaments 2 comprises a thermoplastic polymer selected from the group consisting of polypropylene (PP), polyethylene (PE) or copolymers thereof, polylactic acid (PLA), polyvinylchloride (PVC).

The selection of a plurality of bicomponent filaments 1 and 2 for the mixing operation in step a) of the method according to the invention results in a combination of bicomponent filaments 1 and 2 wherein according to iii) $T_m$(sheath 1) is higher than $T_m$(sheath 2). Preferably $T_m$(sheath 1) is at least 5 °C and most preferably at least 50 °C higher than $T_m$(sheath 2).

Furthermore, the selection of a plurality of bicomponent filaments 1 and 2 for the mixing operation in step a) of the method according to the invention results in a combination of bicomponent filaments wherein according to iv) both $T_m$(core 1) and $T_m$(core 2) are higher than $T_m$(sheath 1). Preferably both $T_m$(core 1) and $T_m$(core 2) are at least 20 °C higher than $T_m$(sheath 1).

In a preferred embodiment of the method of the present invention bicomponent filaments 1 comprise a core of polyethylenterephthalate with $T_m$(core) = 250 °C and a sheath of polyamide 6 with $T_m$(sheath 1) = 220 °C.

In an especially preferred embodiment of the method of the present invention bicomponent filaments 1 comprise a core of polyethyleneterephthalate with $T_m$(core) = 250 °C and a sheath of polyamide 6 with $T_m$(sheath 1) = 220 °C and bicomponent filaments 2 comprises a core of polyethyleneterephthalate with $T_m$(core)=250 °C and a sheath of polypropylene with $T_m$(sheath 2) = 160 °C.

According to step c) a face material is applied for tufting the bonded nonwoven. Preferably the face material to be used in step c) of the method of the invention is selected from the group consisting of polyamide (PA), polypropylene (PP), polylactic acid (PLA), wool and cotton provided that the melting temperature of said polymers and the decomposition temperature of said wool and cotton is higher than $T_m$(sheath 1).

The mixing of a plurality of bicomponent filaments 1 and a plurality of bicomponent filaments 2 in step a) of the method according to the invention can be performed by any of the methods known to those skilled in the art provided that the chosen method of mixing renders a sufficiently homogenous mixture of bicomponent filaments 1 and 2. Within the scope of the present invention the term "homogenous mixture" means that in every given volume element of the basic fibrous layer resulting from step a) of the method according to the invention about the same ratio of bicomponent filaments 1 and 2 is realized.

Preferably the mixing in step a) is performed by assembling or by mixing at a creel or by spinning from 3-component spin packs.

The production of the basic fibrous layer, also called web, may be performed with any of the technologies known for said purpose e.g. with mechanical, pneumatic or wet processing or with electrostatic systems or by using a polymer to web process or with the aid of filament entanglements or with split film methods. Examples for said technologies are e.g. given in chapter 10.1 of the "Manual of nonwovens" (1971), Textile Trade Press, Manchester, England in association with W.R.C. Publishing Co., Atlanta, U.S.A..

The object of the present invention is furthermore achieved by a tufted nonwoven with improved stitch holding comprising a face material which tufts a bonded nonwoven comprising a mixture of a plurality of bicomponent filaments 1 with a plurality of bicomponent filaments 2 wherein

iα) at least bicomponent filaments 1 exhibit a core/sheath geometry wherein component 11 represents the core and component 12 represents the sheath or

iβ) at least bicomponent filaments 1 exhibit a side by side geometry

wherein component 11 represents side 1 and component 12 represents side 2 or

iγ) at least bicomponent filaments 1 exhibit an islands in the sea geometry wherein component 11 represents the islands and component 12 represents the sea

ii) the component 11 exhibits a melting temperature $T_m$(11), the component 22 exhibits a melting temperature $T_m$(22) and $T_m$(11) is equal to $T_m$(22) or $T_m$(11) is not equal to $T_m$(22),

iii) the component 12 exhibits a melting temperature $T_m$(12), the component 21 exhibits a melting temperature $T_m$(21) and $T_m$(12) is higher than $T_m$(21) and

iv) the melting temperatures of both component 11 and 22 and the melting temperatures of components 12 and 21 obey to the relation both $T_m(11)$ and $T_m(22) > T_m(12) > T_m(21)$

and wherein the face material is bonded to bicomponent filaments 1 and 2 by a solidified melt of components 12 and 21.

The tufted nonwoven according to the present invention exhibits excellent stitch holding, because the face material is bonded to bicomponent filaments 1 and 2 by a solidified melt of components 12 and 21 of bicomponent filaments 1 and 2. Furthermore, the tufted nonwoven does not have any problems with respect to delamination because said nonwoven is not a laminate. Finally, the tufted nonwoven exhibits a high degree of kept structural integrity because of the reasons already explained.

Regarding possible embodiments of the

- face material,
- bicomponent filaments and their geometries
- meaning of components 11, 12, 21, and 22 in different bicomponent geometries and
- general criteria for the selection of materials for said components

the same holds true what was still explained during the description of the process according to the invention.

For the sake of conciseness the preferred embodiments of the tufted nonwoven according to the present invention shall be explained in the following in an embodiment according to iα) wherein both bicomponent filaments 1 and 2 exhibit a core/sheath geometry. In this case as explained before the relation of temperatures

- in iii) reads $T_m(\text{sheath } 1) > T_m(\text{sheath } 2)$ and
- in iv) reads both $T_m(\text{core } 1)$ and $T_m(\text{core } 2) > T_m(\text{sheath } 1) > T_m(\text{sheath } 2)$.

In a preferred embodiment the tufted nonwoven of the present invention comprises a homogenous mixture of a plurality of bicomponent filaments 1 and 2. This means that in every given volume element of said tufted nonwoven about the same ratio of bicomponent filaments 1 and 2 is realized. Consequently, in every volume element of the tufted nonwoven the face material can be bonded to bicomponent filaments 1 and 2 with the aid of a solidified melt of the sheath of bicomponent filaments 1 and 2.

In a preferred embodiment of the tufted nonwoven according to the present invention bicomponent filaments 1 exhibit a core/sheath geometry wherein component 11 represents the core and component 12 represents the sheath, wherein bicomponent filaments 2 exhibit a core/sheath geometry wherein component 22 represents the core and component 21 represents the sheath and wherein the cores of bicomponent filaments 1 and of bicomponent filaments 2 comprise a thermoplastic polymer selected from the group consisting of polyethyleneterephthalate (PET), polypropylene (PP), polyamide (PA), polybutyleneterephthalate (PBT), polytrimethyleneterephthalate (PTT), polyphenylenesulfide (PPS), polyethylenenaphthalate (PEN), polyethyleneimide (PEI), polylactic acid (PLA) and polyoxymethylene (POM).

In another preferred embodiment of the tufted nonwoven according to the present invention the sheath of bicomponent filament 1 comprises a thermoplastic polymer selected from the group consisting of polyamide (PA), e.g. PA 6, polypropylene (PP), polyethylene (PE) or copolymers thereof, polybutyleneterephthalate (PBT), polylactic acid (PLA) and aliphatic polyesters.

In still another preferred embodiment of the tufted nonwoven according to the present invention the sheath of bicomponent filament 2 comprises a thermoplastic polymer selected from the group consisting of polypropylene (PP), polyethylene (PE) or copolymers thereof, polylactic acid (PLA) and polyvinylchlorid (PVC).

The selection of bicomponent filaments 1 and 2 for the tufted nonwoven according to the invention results in a combination of bicomponent filaments wherein according to iii) $T_m(\text{sheath } 1)$ is higher than $T_m(\text{sheath } 2)$. Preferably $T_m(\text{sheath } 1)$ is at least 5 °C and most preferably at least 50 °C higher than $T_m(\text{sheath } 2)$.

Furthermore, the selection of bicomponent filaments 1 and 2 for the tufted nonwoven according to the invention results in a combination of bicomponent filaments wherein according to iv) both $T_m(\text{core } 1)$ and $T_m(\text{core } 2)$ are higher than $T_m(\text{sheath } 1)$. Preferably $T_m(\text{core } 1)$ is at least 20 °C higher than $T_m(\text{sheath } 1)$.

In a preferred embodiment of the tufted nonwoven according to the present invention bicomponent filaments 1 comprise a core of polyethyleneterephthalate with $T_m(\text{core}) = 250$ °C and a sheath of polyamide 6 with $T_m(\text{sheath } 1) = 220$ °C.

In an especially preferred embodiment of the tufted nonwoven according to the present invention bicomponent filaments 1 comprise a core of polyethylenterephthalate with $T_m(\text{core}) = 250$ °C and a sheath of polyamide 6 with $T_m(\text{sheath } 1) = 220$ °C and bicomponent filaments 2 comprise a core of polyethyleneterephthalate with $T_m(\text{core})=250°C$ and a sheath of polypropylene with $T_m(\text{sheath } 2)=160°C$.

According to the present invention the tufted nonwoven comprises a face material which tufts a bonded nonwoven. Preferably the said face material is selected from the group consisting of polyamide (PA), polypropylene (PP), polylactic acid (PLA), wool and cotton provided that the melting temperature of said polymers and the decomposition temperature of said wool and cotton is higher than $T_m$(sheath 1).

The object of the present invention is furthermore achieved by a method to manufacture a bonded nonwoven comprising the following steps:

a) Mixing a plurality of bicomponent filaments 1 which comprise a component 11 and a component 12 with a plurality of bicomponent filaments 2 which comprise a component 21 and a component 22 wherein

iα) at least bicomponent filaments 1 exhibit a core/sheath geometry wherein component 11 represents the core and component 12 represents the sheath or

iβ) at least bicomponent filaments 1 exhibit a side by side geometry wherein component 11 represents side 1 and component 12 represents side 2 or

iγ) at least bicomponent filaments 1 exhibit an islands in the sea geometry wherein component 11 represents the islands and component 12 represents the sea

ii) the component 11 exhibits a melting temperature $T_m$(11), the component 22 exhibits a melting temperature $T_m$(22) and $T_m$(11) is equal to $T_m$(22) or $T_m$(11) is not equal to $T_m$(22),

iii) the component 12 exhibits a melting temperature $T_m$(12), the component 21 exhibits a melting temperature $T_m$(21) and $T_m$(12) is higher than $T_m$(21) and

iv) the melting temperatures of both component 11 and 22 and the melting temperatures of components 12 and 21 obey to the relation both $T_m$(11) and $T_m$(22) > $T_m$(12) > $T_m$(21)

and producing a basic fibrous layer in a method known per se in which bicomponent filaments 1 contact bicomponent filaments 2 at zones of overlap, and

b) heating the basic fibrous layer at a temperature for nonwoven production $T_{np}$ which obeys to the relation $T_m$(12) > $T_{np}$ > $T_m$(21) till component 21 melts at the zones of overlap and then cooling below $T_m$(21) resulting in a bonded nonwoven.

Because of the reasons mentioned before the method to manufacture a bonded nonwoven according to the invention results in a bonded nonwoven of high structural integrity. Within the scope of the present invention heating at $T_{np}$ till component 21 melts at the zones of overlap has the same meaning as explained before.

The bonded nonwoven according to the present invention is a suitable intermediate for the manufacture of the tufted nonwoven with kept structural integrity.

Regarding preferred embodiments of the method to manufacture a bonded nonwoven according to the invention reference is made to what was still preferably claimed and described for steps a) and b) of the method to manufacture a tufted nonwoven.

The object of the present invention is furthermore achieved by a bonded nonwoven comprising a mixture of a plurality of bicomponent filaments 1 with a plurality of bicomponent filaments 2 wherein

iα) at least bicomponent filaments 1 exhibit a core/sheath geometry wherein component 11 represents the core and component 12 represents the sheath or

iβ) at least bicomponent filaments 1 exhibit a side by side geometry wherein component 11 represents side 1 and component 12 represents side 2 or

iγ) at least bicomponent filaments 1 exhibit an islands in the sea geometry wherein component 11 represents the islands and component 12 represents the sea

ii) the component 11 exhibits a melting temperature $T_m$(11), the component 22 exhibits a melting temperature $T_m$(22) and $T_m$(11) is equal to $T_m$(22) or $T_m$(11) is not equal to $T_m$(22),

iii) the component 12 exhibits a melting temperature $T_m$(12), the component 21 exhibits a melting temperature $T_m$(21) and $T_m$(12) is higher than $T_m$(21) and

iv) the melting temperatures of both component 11 and 22 and the melting temperatures of components 12 and 21 obey to the relation both $T_m$(11) and $T_m$(22) > $T_m$(12) > $T_m$(21)

and wherein bicomponent filaments 2 exhibit zones of overlap at which bicomponent filaments 2 are bonded by component 21.

Each of the constituents of the bonded nonwoven according to the present invention can be chosen independently from one another within the conditions described before. This enables to introduce specifically desired properties into said bonded nonwoven simply by choosing the appropriate components. Consequently the bonded nonwoven exhibits a fine tuned property profile e.g. regarding water uptake, flame retardation etc..

The bonded nonwoven of the present invention does not necessarily exhibit a preferred side (symmetrical structure). Consequently, during further process steps with said bonded nonwoven it is not necessary to take care of which surface is the top side and which surface is the bottom side. If said bonded nonwoven is already to be used as an end product it can be used on both sides.

Because of the reasons mentioned before the bonded nonwoven according to the invention exhibits high structural integrity and is a suitable intermediate for the manufacture of the tufted nonwoven according to the present invention with improved stitch holding and kept structural integrity.

Regarding preferred embodiments of the bonded nonwoven according to the invention reference is made to what was still preferably claimed and described for step a)iα) - a)iv) during the description of the method to manufacture a tufted nonwoven according to the present invention.

The tufted nonwoven of the present invention and the tufted nonwoven which results from the method according to the present invention exhibit a high degree of structural integrity and stitch holding. Therefore, a backing might not be necessary. Nevertheless, if desired the tufted nonwoven of the present invention and/or the tufted nonwoven resulting from the method of the present invention can be provided with one or more backings, e.g. with two backings.

Because of the high degree of structural integrity and stitch holding the tufted nonwoven of the present invention and the tufted nonwoven resulting from the method of the present invention - without or with backing(s) - can be used advantageously to manufacture tufted carpets for home textiles or for cushion vinyl or for decoration or for textiles in automobiles, trains or aircrafts or for out-door applications like synthetic turf or play grounds.

Further on, the tufted nonwoven of the present invention and the tufted nonwoven resulting from the method of the present invention can be used advantageously for carpet molding, for example for car carpets.

It is possible to obtain very fine filament titers by using e.g. the melt-blown technology for mixing bicomponent filaments 1 and 2 during step a) of the method to manufacture a bonded nonwoven according to the present invention by spinning from 3-component spin packs enabling the production of bonded nonwovens with very fine pore sizes, high surface area and - as explained before - with a high degree of structural integrity. Such a bonded nonwoven is highly suitable for bonding in structural, technical and adhesive applications. For example the bonded nonwoven resulting from the method of the present invention and the bonded nonwoven according to the present invention can be used advantageously to manufacture filters for technical applications, e.g. filters against dust, carbon-particulate matter, pollen or gases or to manufacture filters for medical applications, e.g. filter against bacteria or viruses or filters which can be used as heat and moisture exchangers. In the latter application the bonded nonwoven of the present invention and the bonded nonwoven resulting from the method of the present invention captures heat and moisture from a patients breath during exhalation, and cools and releases the trapped moisture for return to the patient during inspiration. Preferred bicomponent filaments 1 and 2 for said heat and moisture exchanging filter combine a low thermal conductivity with a high hydrophilicity at least on the surface, e.g. realized by core/sheath filaments with a polyamide sheath.

Further on, the bonded nonwoven of the present invention and the bonded nonwoven resulting from the method of the present invention can advantageously be used as a coalescent filter to separate a hydrophilic fluid from a hydrophobic fluid, e.g. water from aviation fuel. For said use hydrophilic bicomponent filaments 1 and 2 comprising a hydrophilic surface are needed to allow the hydrophilic fluid to be held and not spread along the filaments.

Further on, the bonded nonwoven of the present invention and the bonded nonwoven resulting from the method of the present invention can advantageously be used to manufacture a wicking product for use as a reservoir in the transfer of ink in marking and writing instruments for medical wicks or for other products which hold and transfer liquids. For said use bicomponent filaments 1 and 2 are needed which exhibit a high surface energy which allows the filaments to wick the desired quantity of liquid. Therefore, bicomponent filaments comprising e.g. polyethylene terephthalate are more suitable for said wicking purposes than bicomponent filaments comprising e.g. polyolefins.

The invention is explained in more detail in the following example:

## Example

Step a):

For the plurality of bicomponent filaments 1 a yarn is used, consisting of bicomponent filaments which exhibit a core/sheath geometry wherein the core is polyethylenterephthalate (PET) having a melting temperature $T_m(11) = 250$ °C and the sheath is polyamide 6 ($PA_6$) having a melting $T_m(12) = 220$ °C. The volume ratio of sheath/core of this yarn is 26 Vol.-%/74 Vol.-%.

For the plurality of bicomponent filaments 2 a yarn is used, consisting of bicomponent filaments which exhibit a core/sheath geometry wherein the core is polyethylenterephthalate (PET) having a melting temperature $T_m(22) = 250$ °C and the sheath is polypropylene (PP) having a melting temperature $T_m(21) = 165$ °C. The volume ratio of sheath/core of this yarn is 26 Vol.-%/74 Vol.-%.

Bicomponent filaments 1 and 2 are mixed in a weight ratio of 1:1 and laid onto a conveyor belt in a well known way. A basic fibrous layer is produced having a weight por unit area of 100 g/m². As a reference a basic fibrous layer is produced from a yarn of bicomponent filaments 2 only, also having a weight per unit area of 100 g/m$^2$.

Step b):

The basic fibrous layer according to the invention is heated in a through-air bonding drum for about 12 seconds and at a temperature for nonwoven production $T_{np}$ = 170 °C resulting in a bonded nonwoven according to the invention. The same heating procedure is performed with the reference basic fibrous layer resulting in a comparative bonded nonwoven. While the comparative bonded nonwoven shows a firm hand the bonded nonwoven according to the invention exhibits a soft and hairy appearance.

Step c):

Before tufting both the bonded nonwoven according to the invention and the comparative bonded nonwoven are treated with a commercially available suitable tuft finish in a known way, which provides said nonwovens with about 1 - 2 wt.-% of said finish. Next, both the bonded nonwoven according to the invention and the comparative bonded nonwoven are loop pile tufted with a polyamide 66 pile yarn (white; turns = 220S; type 3252 O; heat set; $T_m$ = 250 °C) supplied by Texture - Tex on a tufting machine (1/10" staggered; number of stitches per 10 cm = 50). The pile height in the rows is 4 mm. The measurement of the needle penetration force of the comparative bonded nonwoven yields values which can be determined. However, the needle penetration force of the bonded nonwoven according to the invention is practically zero and therefore, cannot be determined.

Step d):

Both the comparative tufted nonwoven and the tufted nonwoven according to the invention are treated in a calender having

- a smooth roller at ambient temperature which roller faces the pile loops and
- an embossed roller having a benzene like print pattern with 5 % bonding surface capacity heated at a temperature $T_{tn}$ = 235°C which roller faces the back side of the tufted nonwoven.

Both roller diameters are 120 mm. The samples are treated in nip configuration of the calender. The calender pressure is 3 bar, the speed of the rollers is 3.5 m/min, and the residence time of the tufted nonwovens between said rollers is << 1 second. Table 1 shows values of the stitch holding measured before and after said heat and pressure treatment both of the comparative tufted nonwoven and of the tufted nonwoven according to the invention in the calender. The stitch holding is measured according to Colbond Testmethod 1.1.22 (March 26, 2002) "Stitch holding of carpet samples" as described in the following: A representative sample of about 16x16 cm$^2$ is obtained with a die cutting tool from the tufted nonwoven.
From said sample the first center row of pile yarns is removed. Then the next even or odd twenty pile yarn rows are removed. The ends of ten of the remaining pile yarns in machine direction are manually and carefully pulled out of the back side of the tuftet nonwoven. The specimen is fixed in a tentering frame. One end of a pile yarn is fixed in a clamp. The clamp is mounted into the upper clamp of an Instron tensile strength machine provided with a 0-100 N loadcell and has a pulling velocity of 200 mm/min. Then the pile yarn is drawn perpendicularly out of the back side of the tufted nonwoven for a single tuft or for multiple tufts over a distance of 60 mm or minimal three tufts and the force is measured. The maximum force averaged per pile yarn over the number of tuft(s) is the stitch holding value of said single pile yarn. In the same way the stitch holding values of the other nine pile yarns are determined. The mean of the total of maximum forces is defined as the stitch holding of the tufted nonwoven.
Said Colbond stitch holding test method, wherein the pile yarn is pulled out from the back side of the tufted nonwoven, yields lower stitch holding values than ASTM D 1335 (1998), wherein the pile yarn is drawn from the face side of the tufted nonwoven. In the latter case the pile yarn is drawn through the primary backing which results in much higher stitch holding values.
Table 1 shows the results of the stitch holding measurements according to the Colbond test method described above both before and after said pressure and heat treatment (3 bar and 235°C) of the comparative tufted nonwoven and of the tufted nonwoven according to the invention.

**Table 1:**

| Stitch holding of comparative tufted nonwoven (N) | | Stitch holding of tufted nonwoven according to the invention (N) | |
|---|---|---|---|
| before heating: | 0.81 | before heating: | 0.82 |
| after heating: | 0.91 | after heating: | 1.02 |

Table 1 shows that before heating under pressure the stitch holding of the tufted nonwoven according to the invention nearly equals the stitch holding of the comparative tufted nonwoven. After heating under pressure the stitch holding of the tufted nonwoven according to the invention is 12 % higher than the stitch holding of the comparative tufted nonwoven.

Table 2 shows values of the elongation at break measured according to DIN EN 29073-3 (August 1992) in machine direction MD and in a direction perpendicular to the machine direction CMD of the comparative tufted nonwoven and of the tufted nonwoven according to the invention after said pressure (3bar) and heat treatment at $T_{tn}$ = 235°C.

**Table 2:**

| Comparative tufted nonwoven | | Tufted nonwoven of the invention | |
|---|---|---|---|
| | MD/CMD | | MD/CMD |
| Elongation at break (%): | 94/82 | Elongation at break (%): | 106/88 |

Table 2 shows that the elongation at break of the tufted nonwoven according to the invention is higher than that of the comparative tufted nonwoven both in MD and in CMD.

**Claims**

1. A method comprising the following steps:

   a) Mixing a plurality of bicomponent filaments 1 which comprise a component 11 and a component 12 with a plurality of bicomponent filaments 2 which comprise a component 21 and a component 22 wherein

   iα) at least bicomponent filaments 1 exhibit a core/sheath geometry wherein component 11 represents the core and component 12 represents the sheath or
   iβ) at least bicomponent filaments 1 exhibit a side by side geometry wherein component 11 represents side 1 and component 12 represents side 2 or
   iγ) at least bicomponent filaments 1 exhibit an islands in the sea geometry wherein component 11 represents the islands and component 12 represents the sea
   ii) the component 11 exhibits a melting temperature $T_m(11)$ and the component 22 exhibits a melting temperature $T_m(22)$,
   iii) the component 12 exhibits a melting temperature $T_m(12)$, the component 21 exhibits a melting temperature $T_m(21)$ and $T_m(12)$ is higher than $T_m(21)$ and
   iv) the melting temperatures of both component 11 and 22 and the melting temperatures of components 12 and 21 obey to the relation both $T_m(11)$ and $T_m(22) > T_m(12) > T_m(21)$

   and producing a basic fibrous layer in a method known per se in which bicomponent filaments 1 contact bicomponent filaments 2 at zones of overlap, and
   b) heating the basic fibrous layer at a temperature for nonwoven production $T_{np}$ which obeys to the relation $T_m(12) > T_{np} > T_m(21)$ till component 21 melts at the zones of overlap and then cooling below $T_m(21)$ resulting in a bonded nonwoven.

2. The method according to claim 1 additionally comprising the following steps:

   c) Tufting the bonded nonwoven with a face material resulting in a tufted nonwoven, exhibiting contacts between the face material and bicomponent filaments 1 and 2, and optionally
   d) heating the tufted nonwoven at a temperature $T_{tn}$ which obeys to the relation $T_m(12) < T_{tn} < T_m(11)$ and $T_m(22)$ till component 12 and component 21 melt resulting in a tufted nonwoven in which molten component 21 and molten component 12 contact the face material and then cooling the nonwoven below $T_m(21)$

to obtain a tufted nonwoven with improved stitch holding.

3. The method according to claim 1 or 2 wherein bicomponent filaments 1 exhibit a core/sheath geometry wherein component 11 represents the core and component 12 represents the sheath, wherein bicomponent filaments 2 exhibit a core/sheath geometry wherein component 22 represents the core and component 21 represents the sheath and wherein the cores of bicomponent filaments 1 and of bicomponent filaments 2 comprise a thermoplastic polymer selected from the group consisting of polyethyleneterephthlate (PET), polypropylene (PP), polyamide (PA), polybutyleneterephthalate (PBT), polytrimethyleneterephthalate (PTT), polyphenylenesulfide (PPS), polyethylenenaphthalate (PEN), polyethyleneimide (PEI), polylactic acid (PLA) and polyoxymethylene (POM).

4. The method according to one or more of claims 1 to 3 wherein the sheath of bicomponent filament 1 comprises a thermoplastic polymer selected from the group consisting of polyamide (PA), polypropylene (PP), polyethylene (PE) or copolymers thereof, polybutyleneterephthalate (PBT), polylactic acid (PLA) and aliphatic polyesters.

5. The method according to one or more of claims 1 to 4 wherein the sheath of bicomponent filaments 2 comprises a thermoplastic polymer selected from the group consisting of polypropylene (PP), polyethylene (PE) or copolymers thereof, polylactic acid (PLA) and polyvinylchloride (PVC).

6. The method according to one or more of claims 1 to 5 wherein in step a)iii) $T_m(12)$ represents the melting temperature of the sheath of bicomponent filaments 1 $T_m(\text{sheath } 1)$, $T_m(21)$ represents the melting temperature of the sheath of bicomponent filaments 2 $T_m(\text{sheath } 2)$ and $T_m(\text{sheath } 1)$ is at least 5 °C higher than $T_m(\text{sheath } 2)$.

7. The method according to one or more of claims 1 to 6 wherein in step a)iv) $T_m(11)$ represents the melting temperature of the core of bicomponent filaments 1 $T_m(\text{core } 1)$, $T_m(22)$ represents the melting temperature of the core of bicomponent filaments 2 $T_m(\text{core } 2)$ and both $T_m(\text{core } 1)$ and $T_m(\text{core } 2)$ are at least 20 °C higher than $T_m(\text{sheath } 1)$.

8. The method according to one or more of claims 1 to 7 wherein bicomponent filaments 1 comprise a core of poly-ethylenterephthalate with $T_m(\text{core } 1)$ = 250 °C and a sheath of polyamide 6 with $T_m(\text{sheath } 1)$ = 220 °C.

9. The method according to claim 8 wherein bicomponent filaments 1 comprise a core of polyethyleneterephthalate with $T_m(\text{core } 1)$ = 250 °C and a sheath of polyamide 6 with $T_m(\text{sheath } 1)$ = 220 °C and biocomponent filaments 2 comprise a core of polyethyleneterephthalate with $T_m(\text{core } 2)$ = 250 °C and a sheath of polypropylene with $T_m(\text{sheath } 2)$ =160 °C.

10. The method according to one or more of claims 1 to 9 wherein in step c) a face material is used which is selected from the group consisting of polyamide (PA), polypropylene (PP), polylactic acid (PLA), wool and cotton.

11. The method according to one or more of claims 1 to 10 wherein the mixing in step a) is performed by assembling or by mixing at a creel or by spinning from 3-component spin packs.

12. Tufted nonwoven with improved stitch holding comprising a face material which tufts a bonded nonwoven comprising a mixture of a plurality of bicomponent filaments 1 with a plurality of bicomponent filaments 2 wherein

iα) at least bicomponent filaments 1 exhibit a core/sheath geometry wherein component 11 represents the core and component 12 represents the sheath or
iβ) at least bicomponent filaments 1 exhibit a side by side geometry wherein component 11 represents side 1 and component 12 represents side 2 or
iγ) at least bicomponent filaments 1 exhibit an islands in the sea geometry wherein component 11 represents the islands and component 12 represents the sea
ii) the component 11 exhibits a melting temperature $T_m(11)$ and the component 22 exhibits a melting temperature $T_m(22)$,
iii) the component 12 exhibits a melting temperature $T_m(12)$, the component 21 exhibits a melting temperature $T_m(21)$ and $T_m(12)$ is higher than $T_m(21)$ and
iv) the melting temperatures of both component 11 and 22 and the melting temperatures of components 12 and 21 obey to the relation both $T_m(11)$ and $T_m(22) > T_m(12) > T_m(21)$

and wherein the face material is bonded to bicomponent filaments 1 and 2 by a solidified melt of components 12 and 21.

13. Tufted nonwoven according to claim 12 wherein bicomponent filaments 1 exhibits a core/sheath geometry wherein component 11 represents the core and component 12 represents the sheath, wherein bicomponent filaments 2 exhibits a core/sheath geometry wherein component 22 represents the core and component 21 represents the sheath and wherein the cores of bicomponent filaments 1 and of bicomponent filaments 2 comprise a thermoplastic polymer selected from the group consisting of polyethyleneterephthalate (PET), polypropylene (PP), polyamide (PA), polybutyleneterephthalate (PBT), polytrimethyleneterephthalate (PTT), polyphenylenesulfide (PPS), polyethylenenaphthalate (PEN), polyethyleneimide (PEI), polylactic acid (PLA) and polyoxymethylene (POM).

14. Tufted nonwoven according to claim 12 or 13 wherein the sheath of bicomponent filaments 1 comprises a thermoplastic polymer selected from the group consisting of polyamide (PA), polypropylene (PP), polyethylene (PE) or copolymers thereof, polybutyleneterephthalate (PBT), polylactic acid (PLA) and aliphatic polyesters.

15. Tufted nonwoven according to one or more of claim 12 to 14 wherein the sheath of bicomponent filaments 2 comprises a thermoplastic polymer selected from the group consisting of polypropylene (PP), polyethylene (PE) or copolymers thereof, polylactic acid (PLA) and polyvinylchloride (PVC).

16. Tufted nonwoven according to one or more of claim 12 to 15 wherein in iii) $T_m(12)$ represents the melting temperature of the sheath of bicomponent filaments 1 $T_m(\text{sheath } 1)$, $T_m(21)$ represents the melting temperature of the sheath of bicomponent filaments 2 $T_m(\text{sheath } 2)$ and $T_m(\text{sheath } 1)$ is at least 5 °C higher than $T_m(\text{sheath } 2)$.

17. Tufted nonwoven according to one or more of claim 12 to 16 wherein in iv) $T_m(11)$ represents the melting temperature of the core of bicomponent filaments 1 $T_m(\text{core } 1)$, $T_m(22)$ represents the melting temperature of the core of bicomponent filaments 2 $T_m(\text{core } 2)$ and both $T_m(\text{core } 1)$ and $T_m(\text{core } 2)$ are at least 20 °C higher than $T_m(\text{sheath } 1)$.

18. Tufted nonwoven according to one or more of claim 12 to 17 wherein bicomponent filaments 1 comprise a core of polyethylenterephthalate with $T_m(\text{core } 1) = 250$ °C and a sheath of polyamide 6 with $T_m(\text{sheath } 1)=220$ °C.

19. Tufted nonwoven according to one or more of claim 18 wherein bicomponent filaments 1 comprise a core of polyethyleneterephthalate with $T_m(\text{core } 1) = 250$ °C and a sheath of polyamide 6 with $T_m(\text{sheath } 1)=220$°C and bicomponent filaments 2 comprise a core of polyethyleneterephthalate with $T_m(\text{core } 2)=250$°C and a sheath of polypropylene with $T_m(\text{sheath } 2) = 160$°C.

20. Tufted nonwoven according to one or more of claim 12 to 17 wherein the face material is selected from the group consisting of polyamide (PA), polypropylene (PP), polylactic acid (PLA), wool and cotton.

21. Use of the tufted nonwoven according to one or more of claims 12 to 20 or of the tufted nonwoven resulting from the method according to one or more of claims 2 to 11 to manufacture tufted carpets for home textiles or for cushion vinyl or for decoration or for textiles in automobiles, trains or aircrafts or for out-door applications like synthetic turf or play grounds.

22. Use of the tufted nonwoven according to one or more of claims 12 to 20 or of the tufted nonwoven resulting from the method according to one or more of claims 2 to 11 for carpet molding.

23. Use of the bonded nonwoven as defined in claim 12 or of the bonded nonwoven resulting from the method according to claim 1 to manufacture filters for technical or medical applications.

24. Use of the bonded nonwoven as defined in claim 12 or of the bonded nonwoven resulting from the method according to claim 1 as a coalescent filter to separate a hydrophilic fluid from a hydrophobic fluid.

25. Use of the bonded nonwoven as defined in claim 12 or of the bonded nonwoven resulting from the method according to claim 1 to manufacture a wicking product for use as a reservoir in the transfer of ink in marking and writing instruments for medical wicks or for other products which hold and transfer liquids.

**Patentansprüche**

1. Verfahren, das die folgenden Schritte umfasst:

   a) Mischen einer Vielzahl von Bikomponentenfilamenten 1, die eine Komponente 11 und eine Komponente 12 umfassen, mit einer Vielzahl von Bikomponentenfilamenten 2, die eine Komponente 21 und eine Komponente 22 umfassen, wobei

   iα) zumindest die Bikomponentenfilamente 1 eine Kern-Mantel-Geometrie aufweisen, wobei die Komponente 11 den Kern darstellt und die Komponente 12 den Mantel darstellt, oder
   iβ) zumindest die Bikomponentenfilamente 1 eine Seite-an-Seite-Geometrie aufweisen, wobei die Komponente 11 die Seite 1 darstellt und die Komponente 12 die Seite 2 darstellt, oder
   iγ) zumindest die Bikomponentenfilamente 1 eine Inseln-im-Meer-Geometrie aufweisen, wobei die Komponente 11 die Inseln darstellt und die Komponente 12 das Meer darstellt,
   ii) die Komponente 11 einen Schmelzpunkt $T_m(11)$ besitzt und die Komponente 22 einen Schmelzpunkt $T_m(22)$ besitzt,
   iii) die Komponente 12 einen Schmelzpunkt $T_m(12)$ besitzt, die Komponente 21 einen Schmelzpunkt $T_m(21)$ besitzt und $T_m(12)$ höher ist als $T_m(21)$, und
   iv) die Schmelzpunkte der beiden Komponenten 11 und 22 und die Schmelzpunkte der Komponenten 12 und 21 jeweils die Relation $T_m(11)$ und $T_m(22) > T_m(12) > T_m(21)$ erfüllen

   und Herstellen einer Fasergrundschicht nach einem an sich bekannten Verfahren, bei dem die Bikomponentenfilamente 1 die Bikomponentenfilamente 2 in Überlappungsbereichen berühren, und
   b) Erwärmen der Fasergrundschicht bei einer Temperatur zur Herstellung von Vliesstoffen $T_{np}$, welche die Relation $T_m(12) > T_{np} > T_m(21)$ erfüllt, bis die Komponente 21 in den Überlappungsbereichen schmilzt, und anschließend Abkühlen bis unter $T_m(21)$, wodurch ein gebundener Vliesstoff entsteht.

2. Verfahren nach Anspruch 1, das zusätzlich die folgenden Schritte umfasst:

   c) Tuften des verfestigten Vliesstoffs mit einem Polmaterial, wodurch ein getufteter Vliesstoff mit Berührungspunkten zwischen dem Polmaterial und den Bikomponentenfilamenten 1 und 2 entsteht, und optional
   d) Erwärmen des getufteten Vliesstoffs bei einer Temperatur $T_{tn}$, welche die Relation $T_m(12) < T_{tn} < T_m(11)$ und $T_m(22)$ erfüllt, bis die Komponente 12 und die Komponente 21 schmelzen, wodurch ein getufteter Vliesstoff entsteht, in dem die geschmolzene Komponente 21 und die geschmolzene Komponente 12 das Polmaterial berühren, und anschließend Abkühlen des Vliesstoffs bis unter $T_m(21)$,

   um einen getufteten Vliesstoff mit verbesserter Ausreißfestigkeit herzustellen.

3. Verfahren nach Anspruch 1 oder 2, bei dem die Bikomponentenfilamente 1 eine Kern-Mantel-Geometrie aufweisen, wobei die Komponente 11 den Kern darstellt und die Komponente 12 den Mantel darstellt, bei dem die Bikomponentenfilamente 2 eine Kern-Mantel-Geometrie aufweisen, wobei die Komponente 22 den Kern darstellt und die Komponente 21 den Mantel darstellt, und wobei die Kerne der Bikomponentenfilamente 1 und der Bikomponentenfilamente 2 ein thermoplastisches Polymer enthalten, ausgewählt aus der Gruppe bestehend aus Polyethylenterephthalat (PET), Polypropylen (PP), Polyamid (PA), Polybutylenterephthalat (PBT), Polytrimethylenterephthalat (PTT), Polyphenylensulfid (PPS), Polyethylennaphthalat (PEN), Polyethylenimid (PEI), Polymilchsäure (PLA) und Polyoxymethylen (POM).

4. Verfahren nach einem oder mehreren der Ansprüche 1 bis 3, bei dem der Mantel des Bikomponentenfilaments 1 ein thermoplastisches Polymer ausgewählt aus der Gruppe bestehend aus Polyamid (PA), Polypropylen (PP), Polyethylen (PE) oder Copolymeren davon, Polybutylenterephthalat (PBT), Polymilchsäure (PLA) und aliphatischen Polyestern enthält.

5. Verfahren nach einem oder mehreren der Ansprüche 1 bis 4, bei dem der Mantel der Bikomponentenfilamente 2 ein thermoplastisches Polymer ausgewählt aus der Gruppe bestehend aus Polypropylen (PP), Polyethylen (PE) oder Copolymeren davon, Polymilchsäure (PLA) und Polyvinylchlorid (PVC) enthält.

6. Verfahren nach einem oder mehreren der Ansprüche 1 bis 5, bei dem $T_m(12)$ in Schritt a) iii) der Schmelzpunkt $T_m$(Mantel 1) des Mantels der Bikomponentenfilamente 1 ist, $T_m(21)$ der Schmelzpunkt $T_m$(Mantel 2) des Mantels der Bikomponentenfilamente 2 ist und $T_m$(Mantel 1) mindestens 5 °C höher als $T_m$(Mantel 2) ist.

7. Verfahren nach einem oder mehreren der Ansprüche 1 bis 6, bei dem $T_m$(11) in Schritt a)iv) der Schmelzpunkt $T_m$(Kern 1) des Kerns der Bikomponentenfilamente 1 ist, $T_m$(22) der Schmelzpunkt $T_m$(Kern 2) des Kerns der Bikomponentenfilamente 2 ist und sowohl $T_m$(Kern 1) als auch $T_m$(Kern 2) mindestens 20 °C höher als $T_m$(Mantel 1) sind.

8. Verfahren nach einem oder mehreren der Ansprüche 1 bis 7, bei dem die Bikomponentenfilamente 1 einen Kern aus Polyethylenterephthalat mit $T_m$(Kern 1) = 250 °C und einen Mantel aus Polyamid 6 mit $T_m$(Mantel 1) = 220 °C umfassen.

9. Verfahren nach Anspruch 8, bei dem die Bikomponentenfilamente 1 einen Kern aus Polyethylenterephthalat mit $T_m$(Kern 1) = 250 °C und einen Mantel aus Polyamid 6 mit $T_m$(Mantel 1) = 220 °C umfassen und die Bikomponentenfilamente 2 einen Kern aus Polyethylenterephthalat mit $T_m$(Kern 2) = 250 °C und einen Mantel aus Polypropylen mit $T_m$(Mantel 2) = 160 °C umfassen.

10. Verfahren nach einem oder mehreren der Ansprüche 1 bis 9, bei dem in Schritt c) ein Polmaterial ausgewählt aus der Gruppe bestehend aus Polyamid (PA), Polypropylen (PP), Polymilchsäure (PLA), Wolle und Baumwolle verwendet wird.

11. Verfahren nach einem oder mehreren der Ansprüche 1 bis 10, bei dem das Mischen in Schritt a) durch Assemblieren oder durch Mischen an einem Spulengatter oder durch Spinnen aus 3-Komponenten-Spinnpaketen erfolgt.

12. Getufteter Vliesstoff mit verbesserter Ausreißfestigkeit, der ein Polmaterial umfasst, mit dem ein verfestigter Vliesstoff getuftet ist, der eine Mischung aus einer Vielzahl von Bikomponentenfilamenten 1 und einer Vielzahl von Bikomponentenfilamenten 2 umfasst, wobei

iα) zumindest die Bikomponentenfilamente 1 eine Kern-Mantel-Geometrie aufweisen, wobei die Komponente 11 den Kern darstellt und die Komponente 12 den Mantel darstellt, oder
iβ) zumindest die Bikomponentenfilamente 1 eine Seite-an-Seite-Geometrie aufweisen, wobei die Komponente 11 die Seite 1 darstellt und die Komponente 12 die Seite 2 darstellt, oder
iγ) zumindest die Bikomponentenfilamente 1 eine Inseln-im-Meer-Geometrie aufweise, wobei die Komponente 11 die Inseln darstellt und die Komponente 12 das Meer darstellt,
ii) die Komponente 11 einen Schmelzpunkt $T_m$(11) besitzt und die Komponente 22 einen Schmelzpunkt $T_m$(22) besitzt,
iii) die Komponente 12 einen Schmelzpunkt $T_m$(12) besitzt, die Komponente 21 einen Schmelzpunkt $T_m$(21) besitzt und $T_m$(12) höher ist als $T_m$(21), und
iv) die Schmelzpunkte der beiden Komponenten 11 und 22 und die Schmelzpunkte der Komponenten 12 und 21 jeweils die Relation $T_m$(11) und $T_m$(22) > $T_m$(12) > $T_m$(21) erfüllen

und wobei das Polmaterial mittels einer verfestigten Schmelze der Komponenten 12 und 21 an die Bikomponentenfilamente 1 und 2 gebunden ist.

13. Getufteter Vliesstoff nach Anspruch 12, bei dem die Bikomponentenfilamente 1 eine Kern-Mantel-Geometrie aufweisen, wobei die Komponente 11 den Kern darstellt und die Komponente 12 den Mantel darstellt, bei dem die Bikomponentenfilamente 2 eine Kern-Mantel-Geometrie aufweisen, wobei die Komponente 22 den Kern darstellt und die Komponente 21 den Mantel darstellt, und wobei die Kerne der Bikomponentenfilamente 1 und der Bikomponentenfilamente 2 ein thermoplastisches Polymer enthalten, ausgewählt aus der Gruppe bestehend aus Polyethylenterephthalat (PET), Polypropylen (PP), Polyamid (PA), Polybutylenterephthalat (PBT), Polytrimethylenterephthalat (PTT), Polyphenylensulfid (PPS), Polyethylennaphthalat (PEN), Polyethylenimid (PEI), Polymilchsäure (PLA) und Polyoxymethylen (POM).

14. Getufteter Vliesstoff nach Anspruch 12 oder 13, bei dem der Mantel der Bikomponentenfilamente 1 ein thermoplastisches Polymer ausgewählt aus der Gruppe bestehend aus Polyamid (PA), Polypropylen (PP), Polyethylen (PE) oder Copolymeren davon, Polybutylenterephthalat (PBT), Polymilchsäure (PLA) und aliphatischen Polyestern enthält.

15. Getufteter Vliesstoff nach einem oder mehreren der Ansprüche 12 bis 14, bei dem der Mantel der Bikomponentenfilamente 2 ein thermoplastisches Polymer ausgewählt aus der Gruppe bestehend aus Polypropylen (PP), Polyethylen (PE) oder Copolymeren davon, Polymilchsäure (PLA) und Polyvinylchlorid (PVC) enthält.

**16.** Getufteter Vliesstoff nach einem oder mehreren der Ansprüche 12 bis 15, bei dem $T_m(12)$ in iii) der Schmelzpunkt $T_m$(Mantel 1) des Mantels der Bikomponentenfilamente 1 ist, $T_m(21)$ der Schmelzpunkt $T_m$(Mantel 2) des Mantels der Bikomponentenfilamente 2 ist und $T_m$(Mantel 1) mindestens 5 °C höher als $T_m$(Mantel 2) ist.

**17.** Getufteter Vliesstoff nach einem oder mehreren der Ansprüche 12 bis 16, bei dem $T_m(11)$ in iv) der Schmelzpunkt $T_m$(Kern 1) des Kerns der Bikomponentenfilamente 1 ist, $T_m(22)$ der Schmelzpunkt $T_m$(Kern 2) des Kerns der Bikomponentenfilamente 2 ist und sowohl $T_m$(Kern 1) als auch $T_m$(Kern 2) mindestens 20 °C höher als $T_m$(Mantel 1) sind.

**18.** Getufteter Vliesstoff nach einem oder mehreren der Ansprüche 12 bis 17, bei dem die Bikomponentenfilamente 1 einen Kern aus Polyethylenterephthalat mit $T_m$(Kern 1) = 250 °C und einen Mantel aus Polyamid 6 mit $T_m$(Mantel 1) = 220 °C umfassen.

**19.** Getufteter Vliesstoff nach einem oder mehreren des Anspruchs 18, bei dem die Bikomponentenfilamente 1 einen Kern aus Polyethylenterephthalat mit $T_m$(Kern 1) = 250 °C und einen Mantel aus Polyamid 6 mit $T_m$(Mantel 1) = 220 °C umfassen und die Bikomponentenfilamente 2 einen Kern aus Polyethylenterephthalat mit $T_m$(Kern 2) = 250 °C und einen Mantel aus Polypropylen mit $T_m$(Mantel 2) = 160 °C umfassen.

**20.** Getufteter Vliesstoff nach einem oder mehreren der Ansprüche 12 bis 17, bei dem das Polmaterial aus der Gruppe bestehend aus Polyamid (PA), Polypropylen (PP), Polymilchsäure (PLA), Wolle und Baumwolle ausgewählt ist.

**21.** Verwendung des getufteten Vliesstoffs nach einem oder mehreren der Ansprüche 12 bis 20 oder des bei dem Verfahren gemäß einem oder mehreren der Ansprüche 2 bis 11 entstehenden getufteten Vliesstoffs zur Herstellung getufteter Teppiche für Heimtextilien oder für Cushion-Vinyl-Beläge oder zur Dekoration oder für Textilien in Automobilen, Zügen oder Flugzeugen oder für Außenanwendungen wie Kunstrasen oder Spielflächen.

**22.** Verwendung des getufteten Vliesstoffs nach einem oder mehreren der Ansprüche 12 bis 20 oder des bei dem Verfahren gemäß einem oder mehreren der Ansprüche 2 bis 11 entstehenden getufteten Vliesstoffs zum Teppichformen.

**23.** Verwendung des getufteten Vliesstoffs definiert wie in Anspruch 12 oder des bei dem Verfahren nach Anspruch 1 entstehenden getufteten Vliesstoffs zur Herstellung von Filtern für technische oder medizinische Anwendungen.

**24.** Verwendung des getufteten Vliesstoffs definiert wie in Anspruch 12 oder des bei dem Verfahren nach Anspruch 1 entstehenden getufteten Vliesstoffs als Koaleszenzfilter zur Trennung eines hydrophilen Fluids von einem hydrophoben Fluid.

**25.** Verwendung des getufteten Vliesstoffs definiert wie in Anspruch 12 oder des bei dem Verfahren nach Anspruch 1 entstehenden getufteten Vliesstoffs zur Herstellung eines Dochtprodukts für die Verwendung als Speicher beim Transfer von Tinte in Markier- und Schreibgeräten für medizinische Dochte oder für andere Produkte, die Flüssigkeiten aufnehmen und transportieren.

**Revendications**

**1.** Procédé comprenant les étapes suivantes :

a) mêler plusieurs filaments bicomposants 1, qui comprennent un composant 11 et un composant 12, avec plusieurs filaments bicomposants 2, qui comprennent un composant 21 et un composant 22, étant entendu que :

iα) au moins les filaments bicomposants 1 présentent une structure de type coeur-gaine où le composant 11 constitue le coeur et le composant 12 constitue la gaine,
iβ) ou au moins les filaments bicomposants 1 présentent une structure de type côtés côte-à-côte où le composant 11 constitue un premier côté 1 et le composant 12 constitue un deuxième côté 2,
iγ) ou au moins les filaments bicomposants 1 présentent une structure de type îlots-en-mer où le composant 11 constitue les îlots et le composant 12 constitue la mer,

ii) le composant 11 présente une température de fusion $T_m(11)$ et le composant 22 présente une température de fusion $T_m(22)$,

iii) le composant 12 présente une température de fusion $T_m(12)$ et le composant 21 présente une température de fusion $T_m(21)$, $T_m(12)$ étant plus élevée que $T_m(21)$,

iv) et les températures de fusion des deux composants 11 et 22 et les températures de fusion des deux composants 12 et 21 respectent les relations :

$$T_m(11) > T_m(12) > T_m(21)$$

et

$$T_m(22) > T_m(12) > T_m(21),$$

et produire, selon un procédé connu, une couche de fibres de base dans laquelle les filaments bicomposants 1 sont en contact avec les filaments bicomposants 2 au niveau de zones de chevauchement ;

b) et chauffer cette couche de fibres de base, à une température $T_{np}$ de production de non-tissé qui respecte la relation :

$$T_m(12) > T_{np} > T_m(21),$$

jusqu'à ce que le composant 21 fonde au niveau des zones de chevauchement, et la faire ensuite refroidir à une température inférieure à $T_m(21)$, ce qui donne un non-tissé lié.

2. Procédé conforme à la revendication 1, comprenant en outre les étapes suivantes :

c) tufter avec un matériau de face le non-tissé lié, ce qui donne un non-tissé tufté où il existe des contacts entre le matériau de face et les filaments bicomposants 1 et 2,

d) et en option, chauffer ce non-tissé tufté à une température $T_{tn}$ qui respecte les relations :

$$T_m(12) < T_{tn} < T_m(11) \text{ et } T_m(12) < T_{tn} < T_m(22),$$

jusqu'à ce que le composant 12 et le composant 21 fondent, ce qui donne un non-tissé tufté où il existe des contacts entre le matériau de face et les composants 12 et 21 fondus, et faire ensuite refroidir ce non-tissé à une température inférieure à $T_m(21)$,

ce qui donne un non-tissé tufté doté d'une tenue de points améliorée.

3. Procédé conforme à la revendication 1 ou 2, dans lequel les filaments bicomposants 1 présentent une structure de type coeur-gaine où le composant 11 constitue le coeur et le composant 12 constitue la gaine, les filaments bicomposants 2 présentent une structure de type coeur-gaine où le composant 22 constitue le coeur et le composant 21 constitue la gaine, et les coeur des filaments bicomposants 1 et des filaments bicomposants 2 comportent un polymère thermoplastique choisi dans l'ensemble formé par les poly(éthylène téréphtalate) PET, polypropylène PP, polyamides PA, poly(butylène téréphtalate) PBT, poly(triméthylène téréphtalate) PTT, poly(phénylène sulfure) PPS, poly(éthylène naphtalate) PEN, poly(éthylène imide) PEI, poly(acide lactique) PLA, et poly(oxyméthylène) POM.

4. Procédé conforme à l'une ou plusieurs des revendications 1 à 3, dans lequel la gaine des filaments bicomposants 1 comporte un polymère thermoplastique choisi dans l'ensemble formé par les polyamides PA, polypropylène PP, polyéthylène PE et copolymères d'éthylène, poly(butylène téréphtalate) PBT, poly(acide lactique) PLA, et polyesters aliphatiques.

5. Procédé conforme à l'une ou plusieurs des revendications 1 à 4, dans lequel la gaine des filaments bicomposants 2 comporte un polymère thermoplastique choisi dans l'ensemble formé par les polypropylène PP, polyéthylène PE et copolymères d'éthylène, poly(acide lactique) PLA, et poly(chlorure de vinyle) PVC.

**6.** Procédé conforme à l'une ou plusieurs des revendications 1 à 5, dans lequel, dans l'étape a)iii), $T_m(12)$ représente la température de fusion $T_m$(gaine1) de la gaine des filaments bicomposants 1, $T_m(21)$ représente la température de fusion $T_m$(gaine 2) de la gaine des filaments bicomposants 2, et $T_m$(gaine 1) est plus élevée que $T_m$(gaine 2) d'au moins 5 °C.

**7.** Procédé conforme à l'une ou plusieurs des revendications 1 à 6, dans lequel, dans l'étape a)iv), $T_m(11)$ représente la température de fusion $T_m$(coeur 1) du coeur des filaments bicomposants 1, $T_m(22)$ représente la tempé-rature de fusion $T_m$(coeur 2) du coeur des filaments bicomposants 2, et $T_m$(coeur 1) et $T_m$(coeur 2) sont toutes les deux plus élevées que $T_m$(gaine 1) d'au moins 20 °C.

**8.** Procédé conforme à l'une ou plusieurs des revendications 1 à 7, dans lequel les filaments bicomposants 1 comportent un coeur en poly(éthylène téréphtalate) dont la température de fusion $T_m$(coeur 1) vaut 250 °C et une gaine en polyamide 6 dont la température de fusion $T_m$(gaine 1) vaut 220 °C.

**9.** Procédé conforme à la revendication 8, dans lequel les filaments bicomposants 1 comportent un coeur en poly (éthylène téréphtalate) dont la température de fusion $T_m$(coeur 1) vaut 250 °C et une gaine en polyamide 6 dont la température de fusion $T_m$(gaine 1) vaut 220 °C, et les filaments bicomposants 2 comportent un coeur en poly (éthylène téréphtalate) dont la température de fusion $T_m$(coeur 2) vaut 250 °C et une gaine en polypropylène dont la tempéra-ture de fusion $T_m$(gaine 2) vaut 160 °C.

**10.** Procédé conforme à l'une ou plusieurs des revendications 1 à 9, dans lequel, dans l'étape c), on utilise un matériau de face choisi dans l'ensemble formé par les polyamides PA, polypropylène PP, poly(acide lactique) PLA, laine et coton.

**11.** Procédé conforme à l'une ou plusieurs des revendications 1 à 10, dans lequel, dans l'étape a), le mixage est réalisé par assemblage, par mixage au niveau d'un cantre ou par filage à partir de bobines de filature à trois composants.

**12.** Non-tissé tufté doté d'une tenue de points améliorée, qui comprend un matériau de face au moyen duquel est tufté un non-tissé lié comprenant plusieurs filaments bicomposants 1 mêlés avec plusieurs filaments bicomposants 2, et dans lequel :

iα) au moins les filaments bicomposants 1 présentent une structure de type coeur-gaine où le composant 11 constitue le coeur et le composant 12 constitue la gaine,

iβ) ou au moins les filaments bicomposants 1 présentent une structure de type côtés côte-à-côte où le composant 11 constitue un premier côté 1 et le composant 12 constitue un deuxième côté 2,

iγ) ou au moins les filaments bicomposants 1 présentent une structure de type îlots-en-mer où le composant 11 constitue les îlots et le composant 12 constitue la mer,

ii) le composant 11 présente une température de fusion $T_m(11)$ et le composant 22 présente une température de fusion $T_m(22)$,

iii) le composant 12 présente une température de fusion $T_m(12)$ et le composant 21 présente une température de fusion $T_m(21)$, $T_m(12)$ étant plus élevée que $T_m(21)$,

iv) et les températures de fusion des deux composants 11 et 22 et les températures de fusion des deux composants 12 et 21 respectent les relations :

$$T_m(11) > T_m(12) > T_m(21)$$

et

$$T_m(22) > T_m(12) > T_m(21),$$

et le matériau de face est lié aux filaments bicomposants 1 et aux filaments bicomposants 2 au moyen des composants 12 et 21 que l'on a fait fondre, puis solidifiés.

**13.** Non-tissé tufté conforme à la revendication 12, dans lequel les filaments bicomposants 1 présentent une structure de type coeur-gaine où le composant 11 constitue le coeur et le composant 12 constitue la gaine, les filaments bicomposants 2 présentent une structure de type coeur-gaine où le composant 22 constitue le coeur et le composant 21 constitue la gaine, et les coeurs des filaments bicomposants 1 et des filaments bicomposants 2 comportent un polymère thermoplastique choisi dans l'ensemble formé par les poly(éthylène téréphtalate) PET, polypropylène PP, polyamides PA, poly(butylène téréphtalate) PBT, poly(triméthylène téréphtalate) PTT, poly(phénylène sulfure) PPS, poly(éthylène naphtalate) PEN, poly(éthylène imide) PEI, poly(acide lactique) PLA, et poly(oxyméthylène) POM.

14. Non-tissé tufté conforme à la revendication 12 ou 13, dans lequel la gaine des filaments bicomposants 1 comporte un polymère thermoplastique choisi dans l'ensemble formé par les polyamides PA, polypropylène PP, polyéthylène PE et copolymères d'éthylène, poly(butylène téréphtalate) PBT, poly(acide lactique) PLA, et polyesters aliphatiques.

15. Non-tissé tufté conforme à l'une ou plusieurs des revendications 12 à 14, dans lequel la gaine des filaments bicomposants 2 comporte un polymère thermoplastique choisi dans l'ensemble formé par les polypropylène PP, polyéthylène PE et copolymères d'éthylène, poly(acide lactique) PLA, et poly(chlorure de vinyle) PVC.

16. Non-tissé tufté conforme à l'une ou plusieurs des revendications 12 à 15, dans lequel, au point iii), $T_m(12)$ représente la température de fusion $T_m$(gaine 1) de la gaine des filaments bicomposants 1, $T_m(21)$ repré-sente la température de fusion $T_m$(gaine 2) de la gaine des filaments bicompo-sants 2, et $T_m$(gaine 1) est plus élevée que $T_m$(gaine 2) d'au moins

17. Non-tissé tufté conforme à l'une ou plusieurs des revendications 12 à 16, dans lequel, au point iv), $T_m(11)$ représente la température de fusion $T_m$(coeur 1) du coeur des filaments bicomposants 1, $T_m(22)$ représente la température de fusion $T_m$(coeur 2) du coeur des filaments bicomposants 2, et $T_m$(coeur 1) et $T_m$(coeur 2) sont toutes les deux plus élevées que $T_m$(gaine 1) d'au moins 20 °C.

18. Non-tissé tufté conforme à l'une ou plusieurs des revendications 12 à 17, dans lequel les filaments bicomposants 1 comportent un coeur en poly(éthylène téréphtalate) dont la température de fusion $T_m$(coeur 1) vaut 250 °C et une gaine en polyamide 6 dont la température de fusion $T_m$(gaine 1) vaut 220 °C.

19. Non-tissé tufté conforme à la revendication 18, dans lequel les filaments bicomposants 1 comportent un coeur en poly(éthylène téréphtalate) dont la température de fusion $T_m$(coeur 1) vaut 250 °C et une gaine en polyamide 6 dont la température de fusion $T_m$(gaine 1) vaut 220 °C, et les filaments bicomposants 2 comportent un coeur en poly(éthylène téréphtalate) dont la température de fusion $T_m$(coeur 2) vaut 250 °C et une gaine en poly-propylène dont la température de fusion $T_m$(gaine 2) vaut 160 °C.

20. Non-tissé tufté conforme à l'une ou plusieurs des revendications 12 à 17, dans lequel le matériau de face est choisi dans l'ensemble formé par les polyamides PA, polypropylène PP, poly(acide lactique) PLA, laine et coton.

21. Utilisation d'un non-tissé tufté conforme à l'une ou plusieurs des revendications 12 à 20, ou d'un non-tissé tufté obtenu par un procédé conforme à l'une ou plusieurs des revendications 2 à 11, dans la fabrication de tapis tuftés pour textiles ménagers, pour coussin vinyle ou pour décoration, ou pour textiles pour automobiles, trains ou avions ou pour applications en extérieur comme des pelouses ou des terrains de jeux synthétiques.

22. Utilisation d'un non-tissé tufté conforme à l'une ou plusieurs des revendications 12 à 20, ou d'un non-tissé tufté obtenu par un procédé conforme à l'une ou plusieurs des revendications 2 à 11, pour le moulage de tapis.

23. Utilisation d'un non-tissé lié du type défini dans la revendication 12, ou d'un non-tissé lié obtenu par un procédé conforme à la revendication 1, pour la fabrication de filtres destinés à des applications techniques ou médicales.

24. Utilisation d'un non-tissé lié du type défini dans la revendication 12, ou d'un non-tissé lié obtenu par un procédé conforme à la revendication 1, en tant que filtre à coalescence servant à séparer un fluide hydrophile d'un fluide hydrophobe.

25. Utilisation d'un non-tissé lié du type défini dans la revendication 12, ou d'un non-tissé lié obtenu par un procédé conforme à la revendication 1, pour la fabrication de produits à effet de mèche destinés à servir de réservoirs dans des instruments de marquage ou d'écriture à transfert d'encre, de mèches médicales ou dans d'autres produits servant à retenir et transférer des liquides.

**REFERENCES CITED IN THE DESCRIPTION**

**Patent documents cited in the description**

- WO 0012800 A
- US 20020144490 A